# EUROPÄISCHE PATENTSCHRIFT

(11) **EP 2 639 374 B1**
(45) Veröffentlichungstag und Bekanntmachung des Hinweises auf die Patenterteilung: **13.06.2018**
(21) Anmeldenummer: 13001244.6
(22) Anmeldetag: 12.03.2013
(51) Int. Cl.: B23B 51/08, E04B 1/76

(54) **Befestigung von Dämmplatten**
Mounting of insulation boards
Fixation de plaques d'isolation

(30) Priorität: 16.03.2012 DE 102012005207
(43) Veröffentlichungstag der Anmeldung: 18.09.2013
(73) Patentinhaber: EJOT Baubefestigungen GmbH, 57334 Bad Laasphe (DE)
(72) Erfinder: Tiemann, Joachim, 59846 Sundem (DE)
(74) Vertreter: Von Rohr Patentanwälte Partnerschaft mbB

(56) Entgegenhaltungen:
- EP-A1- 0 581 664
- EP-A2- 1 318 250
- EP-A2- 1 505 218
- DE-A1-102004 006 936
- DE-A1-102007 000 235
- DE-B3-102007 053 740
- US-A- 5 066 181
- US-A1- 2011 067 224

## Beschreibung

Die vorliegende Erfindung betrifft ein Verfahren zum Befestigen von Dämmplatten, ein System zur Befestigung von Dämmplatten bzw. Wärmedämmung sowie eine Verwendung eines Befestigungselements zur Befestigung einer Dämmplatte.

Die vorliegende Erfindung befasst sich generell mit der Befestigung von Dämmplatten an einem Bauwerk. Bei den Dämmplatten handelt es sich insbesondere um sogenannte Dämmstoffplatten oder Wärmedämmplatten. Jedoch kann es sich auch um sonstige Fassadenplatten o. dgl. handeln.

Die Dämmplatten sind üblicherweise aus einem verhältnismäßig weichen oder nicht hoch belastbaren Dämmstoff, wie expandiertes Polystyrol o. dgl., hergestellt. Dementsprechend ist eine sichere Befestigung wichtig.

Die Befestigung der Dämmplatten erfolgt an einem Bauwerk, insbesondere an einem Haus oder sonstigen Gebäude, an einer Fassade, Wand oder Decke. Jedoch kann die Befestigung vorzugsweise grundsätzlich auch an einer sonstigen Unterkonstruktion erfolgen. Der Begriff "Bauwerk" ist daher vorzugsweise in einem entsprechend weiten Sinne zu verstehen.

Üblicherweise werden die Dämmplatten an dem Bauwerk angeklebt und zusätzlich mit Dübeln gesichert. Die befestigten Dämmplatten werden dann üblicherweise verputzt. Wichtig ist unter anderem, dass eine gute Dämmung, insbesondere Wärmedämmung, erreicht wird, besonders bevorzugt keine Wärmebrücken gebildet werden, dass sich Dübelteller o. dgl. von außen nicht abzeichnen und dass eine einfache baustellengerechte Befestigung bzw. Montage ermöglicht wird.

Die DE 195 36 171 A1 sieht Dübel mit Dübeltellern an der Dämmplattenoberfläche vor. Dies ist insbesondere im Hinblick auf Dübelabzeichnungen nachteilig. Aus der EP 0 086 452 A2 ist es bekannt, gleichzeitig mit dem Bohren eines Bohrlochs für einen Dübel in einer Dämmplatte eine Vertiefung in der Dämmplatte zur Aufnahme eines Dübeltellers zu erzeugen. Hierfür wird mittels eines Senkbohrers, der einen Fräskopf und einen scheibenförmigen Anschlag umfasst, beim Bohren des Bohrlochs im gleichen Arbeitsgang eine dem Durchmesser des Dübeltellers entsprechende Vertiefung in die Dämmplatte gefräst. In die Vertiefung wird anschließend der Dübel mit dem Dübelteller eingesetzt, wobei die Vertiefung durch eine bereits auf den Dübelteller aufgebrachte Abdeckung ausgefüllt wird. Problematisch sind hier insbesondere der Frässtaub und ein flächenbündiges Schließen der Dämmplatten.

Die EP 1 318 250 A2 sieht vor, dass Dübelteller ausgehend von der Außenseite der Dämmplatten durch Eintreiben eines Spreizelements in einen Dübel in den Dämmstoff gezogen und durch die Dämmplatten hindurch am Bauwerk angedübelt werden. Die Versenktiefe des Dübeltellers hängt von dem Eintreiben des Spreizelements ab.

Die DE 10 2006 006 164 A1 offenbart einen Dübel zur Befestigung von den Platten, wobei der Dübel einen Dübelteller und eine sich anschließenden Dübelhülse sowie ein insbesondere als Schraube ausgebildetes Befestigungselement aufweist. Der Dübelteller ist gewölbt und tellerunterseitig scharfkantig mit einem schneidenartigen Tellerunterrand am Außenumfang ausgebildet. In dem Teller ist ein Stopfen zum Eingriff eines Einschraubwerkzeugs angeordnet. Der Stopfen ist drehfest mit dem Halteteller und der Schraube gekoppelt. Beim Einschrauben schneidet sich der Dübelteller durch die Drehbewegung sowie durch den scharfkantigen unteren Rand in das Dämmplattenmaterial ein. Dementsprechend wird so der Dübelteller in der Dämmplatte versenkt, wobei die Versenktiefe des Dübeltellers von der Einschraublänge der Schraube abhängt. Anschließend wird die Vertiefung durch eine Dämmstoffrondelle verschlossen.

Bei dem aus der DE 10 2006 006 164 A1 bekannten Dübel ist die Staubentwicklung beim Einschrauben problematisch, da der Dübelteller Dämmstoff lösen kann, das nach außen dringt. Dies gilt insbesondere dann, wenn der Dübeltellers Durchbrechungen aufweist, durch die Dämmstoff nach außen dringen kann. Die DE 10 2011 016 383 A1 stellt eine diesbezügliche Weiterentwicklung dar, wobei der Dübelteller außenseitig durch eine Abdeckung beim Einschrauben abgedeckt wird, die das entstehende Senkloch voll umfänglich nach außen abdichtet und nach dem Setzen des Dübels in dem entstehenden Senkloch verbleibt, wobei zwischen der Abdeckung und dem Dübelteller ein Hohlraum zur Aufnahme von gelöstem Dämmstoff gebildet wird.

Die DE 10 2007 046 323 B3 offenbart einen ähnlichen Dübel zur Befestigung von Dämmplatten. Der Dübel weist einen Dübelteller mit unterseitigen Fräsvorrichtungen auf. Der Dübelteller ist mit Durchbrechungen versehen, durch welche ausgefräster Dämmstoff bzw. Frässtaub hindurchtreten kann. Der Dübel weist weiter eine sich an den Dübelteller anschließende Dobelhülse zur Aufnahme eines Spreizelements auf. Das Spreizelement ist insbesondere als Schraube ausgebildet und drehfest mit dem Dobelteller gekoppelt. Dementsprechend wird beim Einschrauben der Dübelteller mitgedreht und in die Dämmplatte eingefräst und dadurch versenkt. Der ausgefräste Dämmstoff wird in einer Auffangvorrichtung gesammelt, die als Kappe ausgebildet ist, die den Dübelteller aufnimmt, so dass eine umfängliche Schneidkante der Auffangvorrichtung entlang des Randes des Befestigungselements in Einschraubrichtung vorragt und dadurch das Eindringen in die Dämmplatte erleichtert. Die Auffangvorrichtung verbleibt in der Dämmplatte nach dem Setzten des Dübels. Die Auffangvorrichtung kann an ihrer Oberseite eine Schicht aus dem Dämmmaterial aufweisen, um die Isolierung zu verbessern und/oder eine gleichmäßige Abdeckung, insbesondere durch eine Putzschicht, zu erleichtern. Nach dem Setzten des Dübels wird das Einschraubwerkzeug herausgezogen, wobei die Auffangvorrichtung eine sich durch flexible Lamellen verschließende Öffnung für die Einschraubvorrichtung aufweisen kann. Nachteilig sind der aufwendige Aufbau und die Abhängigkeit der Einbautiefe des Dübeltellers von der Einschraublänge der Schraube.

Die DE 10 2006 060 538 A1 offenbart einen Dübel zur Befestigung von Dämmplatten. Der Dübel weist eine Dübelhülse, einen Dübelteller und ein drehfest mit dem Dübelteller gekoppeltes Spreizelement, insbesondere in Form einer Schraube, auf. Der Dübelteller ist dämmplattenseitig mit einem hohlzylindrischen Anschlagelement und radial verlaufenden Versteifungssicken versehen. Beim Einschrauben des Spreizelements wird der Dübelteller mitgedreht und in die Dämmplatte versenkt. Nachteilig sind der verhältnismäßig aufwendige Aufbau und die Abhängigkeit der Eindringtiefe des Dübeitellers von der Einschraublänge des Spreizelements.

Die US 2011/0067224 A1 zeigt ein Verfahren zur versenkten Montage von einem Dübel in einem Dämmstoff, wobei der Dübel einen Druckteller und eine daran anschließenden Dübelhülse sowie ein Spreizelement aufweist, wobei eine Gewebelage zwischen dem Dämmstoff und dem Druckteller des Dübels angeordnet wird, der Dübel in ein Bohrloch bis zur Auflage auf der Dämmstoffoberfläche gesteckt wird und das Spreizelement mittels eines Montagewerkzeugs unter Kompression des Dämmstoffs und Ausbildung einer zylindrischen Ausnehmung mit vorbestimmter Tiefe in den Dämmstoff eingetrieben wird. Ein derartiges Montageverfahren ist jedoch aufwendig, da zusätzlich zum Eintreiben des Spreizelements der Dämmstoff komprimiert werden muss und somit ein große Kraftaufwand erforderlich ist.

Die DE 10 2007 000 235 A1 offenbart ein Setzwerkzeug für einen mit einem Befestigungsmittel im Untergrund verankerbaren Dämmstaffdübel, wobei das Setzwerkzeug eine erste Antriebswelle und eine koaxial zur ersten Antriebswelle angeordnete zweite Antriebswelle aufweist, wobei die Antriebswellen über eine Kupplung miteinander verbunden sind, die durch axialen Druck lösbar ist, so dass eine Übertragung eines Drehmoments von der ersten Antriebswelle auf die zweite Antriebswelle und somit auf den Dämmstoffdübel unterbrochen wird, um den Dammstoffdübel in einer gewünschten Setztiefe mit dem Befestigungsmittel zu verankern.

Die DE 10 2007 053 740 B3 offenbart ein Befestigungselement mit einer Kunststoffspirale zum Eindrehen in einen Dämmstoff, einer Kunststoffspreizhülse zum Einbringen in ein Bohrloch und einem Spreizelement, welches durch die Kunststoffspirale hindurch mit der Kunststoffspreizhülse in das Bohrloch eingetrieben werden kann. Die Kunststoffspirale weist eine zweikanalige Aufnahmekammer auf, wobei der erste Kanal der Aufnahmekammer zur Aufnahme einer Bohrerspitze und der zweite Kanal der Aufnahmekammer zur temporären Aufnahme der Kunststoffspreizhülse ausgebildet ist. Mittels eines Bohrers kann das Befestigungselement in den Dämmstoff eingedreht werden bis das Befestigungselement an einer Unterkonstruktion anschlägt. Anschließend kann durch das Befestigungselement hindurch in die Unterkonstruktion gebohrt werden, um die Kunststoffspreizhülse in das Bohrloch einzutreiben.

Der vorliegenden Erfindung liegt die Aufgabe zugrunde, ein Verfahren zum Befestigen von Dämmplatten, ein System zur Befestigung von Dämmplatten sowie ein Befestigungselement bzw. dessen Verwendung zur Befestigung von Dämmplatten vorzuschlagen, wobei ein einfacher und kostengünstiger Aufbau, ein Einsatz von Standarddübeln, eine Entkopplung der Setztiefe eines Befestigungselements von der Einschraublänge und/oder eine einfache bzw. sichere Befestigung ermöglicht wird bzw. werden und/oder wobei ein Abzeichnen von Befestigungselementen und/oder unerwünschte Wärmebrücken vermieden oder zumindest minimiert werden.

Die obige Aufgabe wird durch ein Verfahren gemäß Anspruch 1, ein System gemäß Anspruch 12 oder eine Verwendung gemäß Anspruch 13 gelöst. Vorteilhafte Weiterbildungen sind Gegenstand der Unteransprüche.

Ein Aspekt der vorliegenden Erfindung liegt darin, dass zum Befestigen von Dämmplatten an einem Bauwerk zunächst tellerartige Befestigungselemente in die Dämmplatten unter Drehen, insbesondere also unter Fräsen bzw. Zermahlen von Dämmstoff, eingebracht und dadurch in eine gewünschte Setztiefe gesetzt werden, wodurch entsprechende Vertiefungen in den Dämmplatten erzeugt werden. Erst danach werden die Befestigungselemente mit dem Bauwerk dadurch verdübelt, dass Dübel durch die bereits eingebrachten bzw. gesetzten Befestigungselemente hindurch in ein zugeordnetes Bohrloch in das zugeordnete Bauwerk eingeführt bzw. eingesteckt und mittels eines Spreizelements gespreizt werden. Anschließend werden die Befestigungselemente durch Stopfen aus Dämmmaterial vorzugsweise flächenbündig mit der Außenfläche der zugeordneten Dämmplatte abgedichtet.

So wird ein Setzen bzw. Einbringen der Befestigungselemente unabhängig von der Einschraublänge der Spreizelemente ermöglicht. Insbesondere können die Befestigungselemente eine Setztiefe aufweisen, die größer als die üblicherweise nur etwa 2,5 cm betragende Einschraublänge von Dübelschrauben bzw. Eintauchtiefe von Dübeln in das Bauwerk ist. Die Entkopplung des Setzens der Befestigungselemente und des anschließenden Verdübelns mit dem Bauwerk führt zu einer größeren Flexibilität. Weiter wird der Einsatz von Standarddübeln ermöglicht. Folglich wird ein sehr einfacher und kostengünstiger Aufbau ermöglicht. Darüberhinaus wird die Lagerhaltung vereinfacht. Insbesondere werden kleinere Packvolumen ermöglicht. Eine tiefere Anordnung der Befestigungselemente führt zu geringeren Wärmebrücken bzw. einer besseren Abdeckung und entsprechend besseren Wärmeisolierung. Des Weiteren ermöglicht dies den Einsatz kürzerer Dübel.

Ein anderer Aspekt der vorliegenden Erfindung liegt darin, dass die Setztiefe der Befestigungselemente größer als die Einschraublänge der Schrauben in das Bauwerk ist. Dies ist einer guten Abdeckung bzw. Vermeidung von Wärmebrücken zuträglich. Weiter gestattet dies einen einfachen Aufbau.

Gemäß einem anderen Aspekt der vorliegenden Erfindung zeichnet sich ein vorschlagsgemäßes Befestigungselement bzw. eine vorschlagsgemäße Verwendung insbesondere dadurch aus, dass es vorzugsweise einen einstückig angeformten Vorsprung aufweist, der eine Durchbrechung umgibt und eine Einführschräge zur Erleichterung des Einbringens des Befestigungselements in den Dämmstoff der Dämmplatte bildet. Dies erleichtert insbesondere die Montage.

Gemäß einem weiteren Aspekt der vorliegenden Erfindung weist das Befestigungselement vorzugsweise einen Eingriffsabschnitt für ein Setzwerkzeug zum Drehen des Befestigungselements sowie eine Aufnahme zur Widerlagerung eines Dübels auf. Die Aufnahme ist hohl ausgebildet, so dass ein zugeordneter Dübel von der der Dämmplatte abgewandten Seite des Befestigungselements her in das Befestigungselement einführbar bzw. einsteckbar und durch dieses hindurch bis in ein zugeordnetes Bauwerk einführbar ist.

Gemäß einem weiterem Aspekt der vorliegenden Erfindung zeichnet sich ein vorschlagsgemäßes Setzwerkzeug durch einen vorragenden Kopf mit einem Eingriffsbereich zur drehfesten Kopplung mit einem Befestigungselement sowie durch eine koaxial dazu angeordnete, umlaufende Schneide aus, wobei zwischen der Schneide und dem Kopf ein ringförmiger Aufnahmebereich für das Befestigungselement gebildet wird. So kann eine sehr gute Abdeckung und Abdichtung beim Einbringen bzw. Setzen bzw. Einfräsen eines Befestigungselements in eine Dämmplatte realisiert werden. Weiter wird ein einfacher Aufbau ermöglicht.

Gemäß einer besonders bevorzugten Weiterbildung erfolgt gleichzeitig mit dem Setzen der Befestigungselemente ein Durchbohren der Dämmplatten und Anbohren des zugeordneten Bauwerks. Insbesondere zeichnet sich das vorschlagsgemäße Setzwerkzeug dann dadurch aus, dass dessen Kopf als Bohrer ausgeführt oder zur Aufnahme eines Bohrers ausgebildet ist. Dies gestattet eine sehr einfache Montage, insbesondere da ein separates Bohren vor dem Setzen der Befestigungselemente entfallen kann.

Gemäß der vorliegenden Erfindung werden tellerartige Befestigungselemente drehend in die Dämmplatten eingebracht und anschließend mit dem Bauwerk verdübelt. Durch das Drehen der Befestigungselemente wird Dämmstoff zermahlen bzw. zerfräst, wobei die durchbrechungsfreien Befestigungselemente und eine vorragende Schneide beim Setzen der Befestigungselemente ein Austreten von losem Dämmstoff, Frässtaub o. dgl. vermeiden. So wird eine einfache und/oder staubfreie Montage ermöglicht oder erleichtert.

Die vorliegende Erfindung betrifft insbesondere ein Dämmsystem zur Dämmung eines Bauwerks, insbesondere eines Hauses o. dgl., wobei Dämmplatten mittels Befestigungselementen an dem Bauwerk befestigt werden oder sind. Besonders bevorzugt werden oder sind Befestigungselemente, die durch Dübelverbindungen mit dem Bauwerk verbunden bzw, an diesem angedübelt sind. Bedarfsweise umfasst das vorschlagsgemäße Dämmsystem auch das Bauwerk selbst.

Die vorgenannten Aspekte und Merkmale der vorliegenden Erfindung können beliebig miteinander kombiniert, aber auch unabhängig voneinander realisiert werden.

Weitere Aspekte, Merkmale, Eigenschaften und Vorteile der vorliegenden Erfindung ergeben sich aus den Ansprüchen und werden nachfolgend anhand der Zeichnung einer bevorzugten Ausführungsform näher erläutert. Es zeigt:
- Fig. 1: einen schematischen Schnitt eines Teils eines vorschlagsgemäßen Systems mit einer an einem Bauwerk befestigten Dämmplatte, wobei ein Befestigungselement in die Dämmplatte eingebracht und an das Bauwerk angedübelt ist;
- Fig. 2: einen zu Fig. 1 korrespondierenden schematischen Schnitt des Systems beim Setzen des Befestigungselements mittels eines Setzwerkzeugs;
- Fig. 3: einen schematischen Schnitt des Setzwerkzeugs gemäß Fig. 2;
- Fig. 4: einen zu Fig. 1 korrespondierenden Schnitt des Systems beim Andübeln des Befestigungselements mittels eines Einschraubwerkzeugs;
- Fig. 5: einen zu Fig. 4 korrespondierenden schematischen Schnitt des Systems mit fertig angedübeltem Befestigungselement;
- Fig. 6: einen zu Fig. 4 korrespondierenden schematischen Schnitt des Systems mit einem anderen Einschraubwerkzeug; und
- Fig. 7: einen zu Fig. 2 korrespondierenden schematischen Schnitt des Systems beim Setzen des Befestigungselements mittels eines etwas modifizierten Setzwerkzeugs.

In den Figuren werden für gleiche Bauteile die gleichen Bezugszeichen verwendet, wobei sich entsprechende oder gleiche Vorteile ergeben, auch wenn eine wiederholte Beschreibung weggelassen ist.

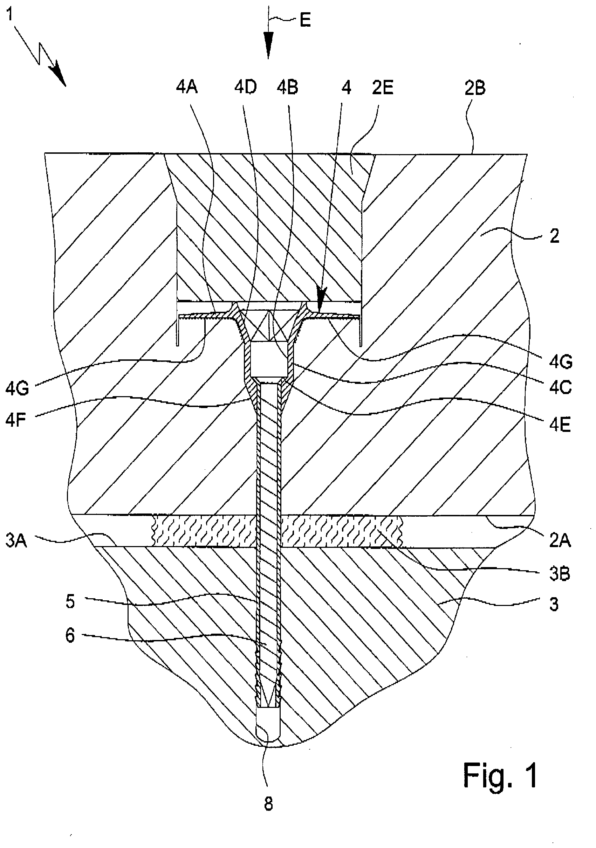

Fig. 1 zeigt in einem sehr schematischen, nicht maßstabsgerechten Schnitt eine bevorzugte Ausführungsform eines vorschlagsgemäßen Dämmsystems bzw. Systems 1 zur Befestigung von Dämmplatten 2 an einem Bauwerk 3. Dargestellt ist in Fig. 1 ein Ausschnitt bzw. Teil des Systems 1 bzw. einer Dämmplatte 2 mit einem Befestigungselement 4 bzw. im Bereich eines Befestigungselements 4, das an das Bauwerk 3 angedübelt ist. Vorzugsweise sind einer Dämmplatte 2 bzw. jeder Dämmplatte 2 mehrere Befestigungselemente 4 zugeordnet, die an dem Bauwerk 3 angedübelt sind.

Nachfolgend wird primär nur auf eine Dämmplatte 2 und ein Befestigungselement 4 zur Befestigung der Dämmplatte 2 Bezug genommen, auch wenn das System 1 vorzugsweise oder üblicherweise mehrere Dämmplatten 2 umfasst, die insbesondere auf Stoß angeordnet werden und/oder eine möglichst durchgehende Dämmschicht zur Dämmung des Bauwerks 3 bilden.

Die Dämmplatte 2 dient insbesondere der Wärmedämmung bzw. Wärmeisolierung. Die Dämmplatte 2 ist aus einem entsprechenden Dämmstoff hergestellt, insbesondere besteht die Dämmplatte 2 im Wesentlichen oder ausschließlich aus diesem Dämmstoff. Vorzugsweise wird ein geschäumter Dämmstoff, wie expandiertes Polystyrol, o. dgl. eingesetzt.

Die Dämmplatte 2 ist vorzugsweise zumindest im Wesentlichen quadratisch oder rechteckig ausgebildet. Jedoch kann die Dämmplatte 2 grundsätzlich auch jede sonstige Form aufweisen.

Die Dämmplatte 2 weist üblicherweise eine Dicke von mehreren cm, beispielsweise von 6 bis 30 cm, meistens etwa von 10 bis 16 cm, auf.

Die Dämmplatte 2 wird mit einer Flachseite am Bauwerk 3 befestigt. Diese Flachseite wird hier als Bauwerkseite 2A bezeichnet.

Bei dem Bauwerk 3 handelt es sich insbesondere um ein Gebäude, eine Mauer, eine Wand, besonders bevorzugt eine Außenwand, eine Decke o. dgl. Die Dämmplatte 2 kann mit ihrer Bauwerkseite 2A unmittelbar an dem Bauwerk 3 bzw. dessen Oberfläche 3A angebracht werden. Jedoch kann zwischen dem Bauwerk 3 und der Dämmplatte 2 - zumindest bereichsweise, ggf. aber auch vollflächig - ein Hohlraum oder eine Schicht 3B, wie eine Zwischenschicht oder Verbindungsschicht, besonders bevorzugt zum Ausgleichen von Unebenheiten und/oder zum Verbinden bzw. Verkleben, wie in Fig. 1 angedeutet, vorgesehen sein. Besonders bevorzugt ist die Dämmplatte 2 mit dem Bauwerk 3 bzw. dessen Oberfläche 3A verklebt oder auf sonstige Weise, insbesondere materialschlüssig, verbunden.

Die Oberfläche 3A des Bauwerks 3 kann insbesondere von einem Putz, von Mauerwerk oder dergleichen gebildet sein. Insbesondere kann die Oberfläche 3A eine Fassade des Bauwerks 3 bilden oder darstellen.

Fig. 1 zeigt das System 1 bzw. die Dämmplatte 2 in einem am Bauwerk 3 befestigten Zustand, also in einem fertigen Zustand. Das Befestigungselement 4 ist in die Dämmplatte 2 eingebracht und mittels eines Dübels 5 an dem Bauwerk 4 angedübelt. Der Dübel 5 ist in diesem Zustand durch ein eingeführtes Spreizelement, insbesondere eine Schraube 6, im Bauwerk 3 gespreizt, die Schraube 6 ist in diesem Zustand also in den Dübel 5 vollständig eingeschraubt. Anstelle der Schraube 6 kann jedoch ein sonstiges Spreizelement verwendet werden, beispielsweise ein Einschlagelement bei einem Schlagdübel. Die weiteren Ausführungen gelten dem entsprechend.

Zunächst wird auf das Befestigungselement 4 und das Einbringen des Befestigungselements 4 in die Dämmplatte 2 - also das Setzen des Befestigungselements 4 - näher eingegangen.

Das Befestigungselement 4 ist vorzugsweise zumindest im Wesentlichen tellerartig oder zumindest im Wesentlichen weitgehend flach ausgebildet.

Beim Darstellungsbeispiel ist das Befestigungselement 4 insbesondere im Wesentlichen scheibenartig bzw. kreisscheibenartig ausgebildet.

Insbesondere weist das Befestigungselement 4 einen Abschnitt 4A auf, der zumindest im Wesentlichen flach, scheibenförmig, tellerartig und/oder ringartig ausgebildet ist und daher als Tellerabschnitt bezeichnet wird.

Das Befestigungselement 4 bzw. der Tellerabschnitt 4A weist eine zentrale Durchbrechung 4B auf, die vorzugsweise von einem in Einbringrichtung E bzw. radial vorragenden Vorsprung 4C umgeben oder darin gebildet ist.

Das Befestigungselement 4 weist vorzugsweise die Durchbrechung 4B auf, um das Befestigungselement 4 mit dem Bauwerk 3, insbesondere mittels einer Dübelverbindung, verbinden zu können.

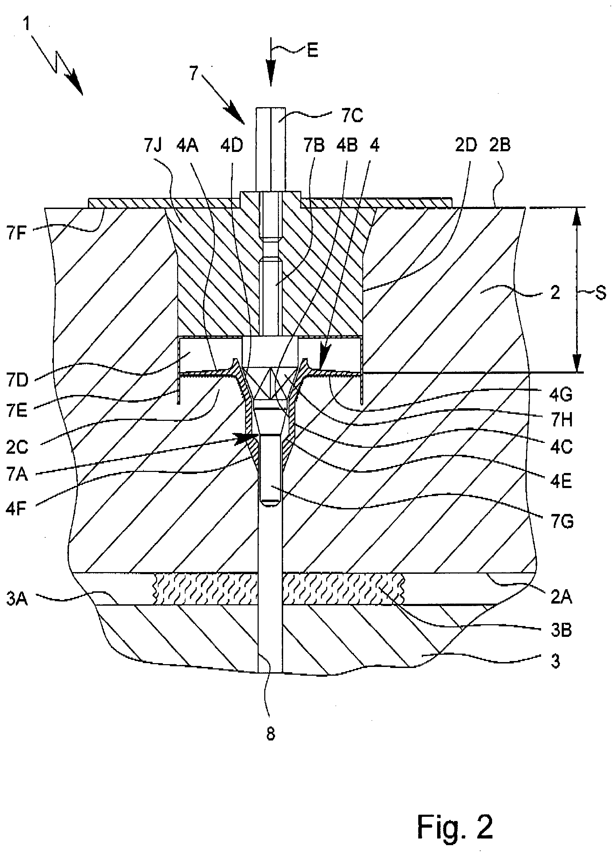

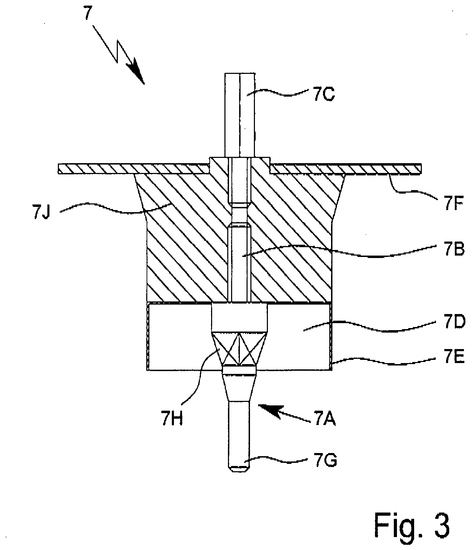

Das Befestigungselement 4 bzw. die Durchbrechung 4B weist vorzugsweise einen Eingriffsabschnitt 4D zum drehfesten Eingriff oder Angriff eines Setzwerkzeuges 7 (in Fig. 2 und 3 dargestellt) und/oder einer Aufnahme 4E für den Dübel 5 auf.

Die Durchbrechung 4B bzw. der Eingriffsabschnitt 4D bzw. die Aufnahme 4E ist bzw. sind vorzugsweise radial gestuft bzw. weisen einen sich in Richtung E reduzierenden Innendurchmesser auf.

Beim Darstellungsbeispiel ist die Durchbrechung 4B im Bereich des Eingriffsabschnitts 4D in die Richtung E, also in Richtung zum Bauwerk 3 hin, verjüngt und/oder zumindest im Wesentlichen konisch ausgebildet und/oder vorzugsweise mit einer polygonalen oder sonstigen nicht runden Innenkontur oder -struktur versehen.

Die Durchbrechung 4B bzw. der Eingriffsabschnitt 4D bildet vorzugsweise eine Einführschräge für das Setzwerkzeug 7 bzw. dessen Kopf 7A. Der Eingriffsabschnitt 4D kann grundsätzlich jede beliebige Form oder Kontur aufweisen und beispielsweise auch durch eine Schulter und/oder einen zumindest im Wesentlichen zylindrischen Abschnitt oder dergleichen gebildet sein. Im Hinblick auf die gewünschte drehfeste Verbindbarkeit mit dem Setzwerkzeug 7 wird ein radialer und/oder axialer Eingriff zur Drehmomentübertragung ermöglicht.

Die Aufnahme 4E weist vorzugsweise eine insbesondere konische Innenschulter und/oder einen sonstigen Abschnitt zur Bildung eines Widerlagers für den Dübel 5, insbesondere für ein konisch erweitertes, hinteres (bauwerkfernes) Ende des Dübels 5 auf. Jedoch sind hier auch andere Gestaltungen möglich.

Das Befestigungselement 4 bzw. dessen Vorsprung 4C bildet vorzugsweise außenseitig eine Einführschräge 4F, die sich in Richtung E bzw. zum bauwerksseitigen Ende hin verjüngt und/oder konisch ausgebildet ist.

Das Befestigungselement 4 bzw. deren Tellerabschnitt 4A weist unterseitig bzw. bauwerkseitig vorzugsweise eine Profilierung, Zahnung 4G oder dergleichen auf, insbesondere um darunterliegenden Dämmstoff der Dämmplatte 2 beim drehenden Einbringen bzw. Setzen des Befestigungselements 4 (leichter) zu zermahlen bzw. das Einfräsen in die Dämmplatte 2 zu erleichtern. Der Tellerabschnitt 4A bildet also einen Frästeller.

Das Befestigungselement 4 bzw. dessen Tellerabschnitt 4A ist vorzugsweise geschlossen, bzw. durchbrechungsfrei - mit Ausnahme der zentralen Durchbrechung 4B - ausgebildet.

Das Befestigungselement 4 ist vorzugsweise einstückig ausgebildet und/oder aus einem vorzugsweise zähen bzw. schlagfesten Kunststoff hergestellt.

Beim Darstellungsbeispiel ist das Befestigungselement 4 vorzugsweise als separates Teil ausgebildet und/oder aus einem vorzugsweise relativ festen Kunststoff und/oder aus einem anderen Material als die Dämmplatten 2 hergestellt. Vorzugsweise ist das Befestigungselement 4 spritzgegossen.

Vorzugsweise wird das Befestigungselement 4 mit seiner Hauptebene bzw. Plattenebene oder Haupterstreckungsebene parallel zu der Dämmplatte 2 in diese eingebracht bzw. in dieser angeordnet.

Die Dämmplatte 2 wird am Bauwerk 3 befestigt bzw. angeordnet. Besonders bevorzugt wird die Dämmplatte 2 am Bauwerk 3 bzw. dessen Oberfläche 3A angeklebt. So wird eine erste oder hilfsweise bzw. temporäre Verbindung der Dämmplatte 2 mit dem Bauwerk 3 erreicht. Insbesondere dient hierbei die optionale Schicht 3B dem Verkleben und/oder Ausgleich von Unebenheiten o. dgl. Dieses erste bzw. temporäre Verbinden kann jedoch auch auf sonstige geeignete Art und Weise erfolgen oder alternativ durch ein Halten der jeweiligen Dämmplatte 2 am Bauwerk 3 erreicht werden.

Die am Bauwerk 3 angeordnete Dämmplatte 2 wird durchbohrt. Dabei werden vorzugsweise Bohrungen 8 erzeugt, die sich bis in das Bauwerk 3 für das spätere Verdübeln erstrecken. In den Fig. ist jeweils nur eine Bohrung 8 dargestellt. Jedoch wird jede Dämmplatten 2 vorzugsweise mehrfach durchbohrt, da jede Dämmplatte 2 vorzugsweise an mehreren Stellen befestigt bzw. mit dem Bauwerk 3 verdübelt wird. Alternativ kann das Bohren auch erst nach dem Setzen der Befestigungselemente 4 durch diese hindurch erfolgen.

Anschließend erfolgt das Setzen der Befestigungselemente 4, das nachfolgend anhand der Fig. 2 und 3 für ein Befestigungselement 4 erläutert wird.

Zum Setzen des Befestigungselements 4 wird vorzugsweise ein Setzwerkzeug 7 eingesetzt. Fig. 2 zeigt das Setzwerkzeug 7 beim Setzen des Befestigungselements 4 in einem zu Fig. 1 korrespondierenden, schematischen Schnitt. Fig. 3 das vorschlagsgemäße Setzwerkzeug 7 in Alleinstellung.

Das Setzwerkzeug 7 weist vorzugsweise einen Kopf 7A, einen Schaft 7B, einen Antriebsabschnitt 7C, einen Aufnahmebereich 7D für das Befestigungselement 4, einen Schneide 7E und/oder einen Anschlag 7F auf.

Der Kopf 7A ist vorzugsweise über den Schaft 7B drehfest mit dem Antriebsabschnitt 7C verbunden. Der Antriebsabschnitt 7C dient der Aufnahme und Halterung des Setzwerkzeugs 7 in einem geeigneten Drehantrieb, insbesondere einen Akkuschrauber, einer Bohrmaschine oder dergleichen. Beim Darstellungsbeispiel ist der Antriebsabschnitt 7C beispielsweise als Vorsprung bzw. Mehrkant ausgebildet. Jedoch kann es sich hier auch um eine Eingriffsmöglichkeit für einen Mehrkant, einen Bit oder dergleichen handeln.

Zum Setzen des Befestigungselements 4 wird der Kopf 7A des Setzwerkzeugs 7 in die Durchbrechung 4B des Befestigungselements 4 eingeführt und das Befestigungselement 4 bzw. dessen Tellerabschnitt 4A im Aufnahmebereich 7D des Setzwerkzeugs 7 aufgenommen. Insbesondere ragt dann die Schneide 7E seitlich und/oder vollumfänglich entlang des Umfangs des Befestigungselements 4 bzw. Tellerabschnitts 4A axial bzw. in Einbringrichtung E über den Umfangsrand des Tellerabschnitts 4A vor.

Besonders bevorzugt ist allenfalls ein minimales Spiel oder ein gewisser Klemmsitz bzw. Presssitz zwischen dem Umfangsrand des Befestigungselements 4 bzw. Tellerabschnitts 4A einerseits und der Innenwandung der Schneide 7E andererseits gebildet. Dies führt zu einer guten Abdichtung beim Setzen und/oder gestattet eine temporäre Halterung des Befestigungselements 4 am Setzwerkzeug 7.

Das Setzwerkzeug 7 bzw. dessen Kopf 7A weist vorzugsweise eine insbesondere zumindest im Wesentlichen zylindrische Spitze 7G auf, die durch das Befestigungselement 4 bzw. deren Durchbrechung 4B oder Vorsprung 4C hindurch nach vorne, also in Einbringrichtung E bzw. zur Dämmplatte 2 hin bzw. zum Bauwerk 3 hin vorragt. Zum Setzen des Befestigungselements 4 wird das Setzwerkzeug 7 mit der Spitze 7G in eine entsprechende Bohrung 8 eingeführt und dadurch seitlich geführt. Der Durchmesser der Spitze 7G ist daher vorzugsweise entsprechend an den Durchmesser der Bohrung 8 angepasst. Insbesondere entspricht der Durchmesser der Spitze 7G zumindest im Wesentlichen dem Innendurchmesser der Bohrung 8.

Nach dem Ansetzen des Setzwerkzeugs 7 an die zugeordnete Bohrung 8 wird das Setzwerkzeug 7 in Drehung bzw. Rotation versetzt und unter Druck in axialer Richtung bzw. Einbringrichtung E vorgeschoben, um das vorne am Setzwerkzeug 7 angeordnete Befestigungselement 4 in die Dämmplatte 2 einzubringen, also zu setzen.

Das Befestigungselement 4 wird also mittels des Setzwerkzeugs 7 von der Außenseite 2B der Dämmplatte 2 her in die Dämmplatten 2 eingebracht.

Das Befestigungselement 4 wird beim Setzen bzw. zum Setzen mittels des Setzwerkzeugs 7 gedreht bzw. rotiert. Hierzu kann das Setzwerkzeug 7 bzwdessen Kopf 7A drehfest an oder in das Befestigungselement 4 bzw. dessen Durchbrechung 4B bzw, dessen Eingriffsabschnitt 4D angreifen bzw. eingreifen. Beim Darstellungsbeispiel in Fig. 2 weist der Kopf 7A vorzugsweise einen Eingriffsbereich 7H auf, der in den Eingriffsabschnitt 4D bei auf das Setzwerkzeug 7 aufgesetztem Befestigungselement 4 eingreift. Der Eingriffsbereich 7H ist beim Darstellungsbeispiel vorzugsweise zumindest im Wesentlichen konisch bzw. in Einbringrichtung E bzw. nach vorne hin verjüngt ausgebildet und/oder mit einer nicht runden, insbesondere mit einer polygonalen Außenkontur versehen, so dass zwischen dem Eingriffsabschnitt 4D und dem Eingriffsbereich 7H und damit zwischen dem Setzwerkzeug 7 und dem Befestigungselement 4 die gewünschte Drehkopplung, insbesondere durch radialen und/oder axialen Eingriff, beim Setzen des Befestigungselements 4 ermöglicht bzw. sichergestellt wird.

Besonders bevorzugt bildet der Kopf 7A bzw. dessen Eingriffsbereich 7H einen axialen Anschlag für das aufgesetzte Befestigungselement 4. Jedoch sind auch andere konstruktive Lösungen hier möglich. Beispielsweise kann der axiale Anschlag für das Befestigungselement 4 am Setzwerkzeug 7 auch durch ein anderes Bauteil gebildet sein.

Beim Setzen wird das Befestigungselement 4 vorzugsweise mit seinem Vorsprung 4C bzw. der Einführschräge 4F voraus in die Dämmplatte 2 eingebracht bzw. eingetrieben. Die Einführschräge 4F und der Vorsprung 4C verdrängen Dämmstoff um die Bohrung 8 herum, insbesondere seitlich bzw. radial. Dieses Einführen und Verdrängen wird durch das Drehen des Befestigungselements 4 erleichtert.

Beim Setzen des Befestigungselements 4 schneidet die Schneide 7E des Setzwerkzeugs 7 den Dämmstoff bzw. die Dämmplatte 2 kreisförmig ein. Der zwischen der Innenfläche der Schneide 7E und dem Vorsprung 4C unter dem Tellerabschnitt 4A in einem Zwischenbereich 2C liegende Dämmstoff wird von dem sich axial vorwärts bewegenden Tellerabschnitt 4C zermahlen bzw. zerfräst, insbesondere unterstützt oder erleichtert durch die optional vorgesehene Profilierung, Zahnung 4G oder dergleichen. In diesem Zusammenhang ist anzumerken, dass sich die Zahnung 4G vorzugsweise auch außenseitig am Vorsprung 4C fortsetzen kann, insbesondere im Bereich eines sich an den Tellerabschnitt 4A anschließenden konischen Abschnitts des Vorsprungs 4C.

Beim Setzen bzw. Einbringen des Befestigungselements 4 bzw. beim Zermahlen oder Zerfräsen des Dämmstoffs tritt vorzugsweise kein Staub oder loser Dämmstoff auf Grund der vorragenden bzw. vorlaufenden Schneide 7E nach außen.

Weiter wird der zermahlene Dämmstoff, loser Dämmstoff und/oder Frässtaub vorzugsweise zumindest im Wesentlichen vollständig unter dem Befestigungselement 4 bzw. dessen Tellerabschnitt 4A gehalten. Hierfür sorgt insbesondere eine durchbrechungsfreie Ausbildung des Befestigungselements 4 bzw. Tellerabschnitts 4A.

Weiter liegt das Befestigungselement 4 bzw. dessen Tellerabschnitt 4A randseitig umlaufend vorzugsweise zumindest im Wesentlichen dicht an der Innenwandung des Setzwerkzeugs 7 bzw. der Schneide 7E an. Dies wird insbesondere durch den bevorzugten Passsitz oder Presssitz unterstützt oder erleichtert. So wird verhindert oder minimiert, dass Frässtaub auf die Außenseite des Tellerabschnitts 4A gelangt.

Alternativ oder zusätzlich kann das Befestigungselement 4 bzw. der Tellerabschnitt 4A auch umlaufend einen axial vorstehenden Rand, Lippenabschnitt oder dergleichen aufweisen, insbesondere um die umfangsseitige Abdichtung oder Anlage zu verbessern. Alternativ oder zusätzlich kann dieser umlaufende Rand auch zumindest im Wesentlichen zylindrisch ausgebildet sein und/oder in axialer Richtung bzw. Einbringrichtung E vorragen, und/oder die Schneide 7E bilden bzw. ersetzten oder unterstützen. Jedenfalls kann dann die Schneide 7E bzw. der diese bildende hohlzylindrische Bereich oder Hülsenbereich kürzer ausfallen oder ganz entfallen.

Der optionale Anschlag 7F dient vorzugsweise einer Festlegung der Setztiefe S des Befestigungselements 4. Die Setztiefe S gibt insbesondere den Abstand des Befestigungselements 4 bzw. Tellerabschnitts 4A von der Außenseite 2B der Dämmplatte 2 an, wie in Fig. 2 angedeutet. Der Anschlag 7F ragt vorzugsweise seitlich bzw. radial vor, so dass er bei Erreichen der gewünschten Setztiefe S auf der Außenseite 2B der Dämmplatte 2 zur Anlage kommt.

Optional kann der Anschlag 7F auch axial verstellbar sein, insbesondere stufig, um eine Anpassung der Setztiefe S bzw. verschiedener Setztiefen S zu ermöglichen, besonders bevorzugt zur Anpassung an unterschiedliche Dämmplattendicken.

Nach Erreichen der gewünschten Setztiefe S bzw. nach Einbringen oder Setzen des Befestigungselements 4 wird das Setzwerkzeug 7 herausgezogen. Das Befestigungselement 4 verbleibt hierbei in der Dämmplatte 2, insbesondere auf Grund des reibschlüssig und/oder klemmend im Dämmstoff bzw. in der Dämmplatte 2 sitzenden Vorsprungs 4C des Befestigungselements 4.

Beim Setzen des Befestigungselements 4 wird durch das Befestigungselement 4 bzw. Setzwerkzeug 7 eine Vertiefung 2D in der Dämmplatte 2 erzeugt. Diese Vertiefung 2D ist insbesondere zumindest im Wesentlichen zylindrisch und/oder in der Art einer Senkbohrung ausgebildet. Der Durchmesser der Vertiefung 2D entspricht vorzugsweise zumindest im Wesentlichen dem Außendurchmesser des Befestigungselements 4 bzw. Tellerabschnitts 4A bzw. der Schneide 7E, insbesondere im Bereich des vorlaufenden Endes oder Rands der Schneide 7E.

Die Vertiefung 2D kann bedarfsweise - teilweise oder vollständig - konisch ausgebildet sein. Beim Darstellungsbeispiel ist die Vertiefung 2D vorzugsweise in einem Bereich benachbart zur Außenseite 2B der Dämmplatte 2 nach außen hin konisch erweitert. Diese konische Erweiterung wird vorzugsweise durch entsprechende radiale Aufweitung des Dämmstoffs durch das Setzwerkzeug 7 erreicht. Das Setzwerkzeug 7 weist beim Darstellungsbeispiel vorzugsweise eine zum Anschlag 7F hin entsprechend konische verbreiterte Außenkontur auf.

Die Schneide 7E ist beim Darstellungsbeispiel vorzugsweise durch einen hohlzylindrischen Abschnitt oder Hülsenabschnitt gebildet, der insbesondere eine zylindrische Außenkontur des Werkzeugs 7 bildet oder festlegt und jedenfalls auch - insbesondere zum Anschlag 7F hin - konisch ausgebildet bzw. verbreitert ist.

Beim Darstellungsbeispiel weist das Setzwerkzeug 7 vorzugsweise ein Gehäuseteil 7J auf, das die axial vorragende Schneide 7E und/oder die vorzugsweise zumindest im Wesentlichen zylindrische Außenkontur des Werkzeugs 7 bildet und/oder das den Anschlag 7F bildet oder trägt bzw. mit diesem verbunden ist.

Beim Darstellungsbeispiel ist das Gehäuseteil 7J vorzugsweise aus Metall hergestellt und/oder verbindet das Gehäuseteil 7J die Schneide 7E drehfest mit dem Antriebsabschnitt 7C bzw. Schaft 7B bzw. Kopf 7A und/oder Anschlag 7F. Jedoch sind hier auch andere konstruktive Lösungen möglich.

Der Anschlag 7F wird vorzugsweise durch ein platten- oder scheibenartiges Element gebildet, das besonders bevorzugt flach ausgebildet ist und/oder radial über das Gehäuseteil 7J bzw. die Schneide 7E vorragt. Das Element ist vorzugsweise mit dem Gehäuseteil 7J verbunden.

Nach dem Setzen wird das Befestigungselement 4 mit dem Bauwerk 3 (dauerhaft oder hoch belastbar oder zusätzlich) verbunden, insbesondere durch eine Dübelverbindung oder auf sonstige geeignete Weise. Dieses (zweite) Verbinden der Dämmplatte 2 zusätzlich zu dem Verkleben erfolgt vorzugsweise bei allen Befestigungselementen 4, auch wenn dies nachfolgend beispielhaft nur für ein Befestigungselement 4 beschrieben wird.

Der Dübel 5, vorzugsweise mit vormontiertem Spreizelement, insbesondere mit teilweise eingeschraubter Schraube 6, wird in die Dämmplatte 2 bzw. die Durchbrechung 4C und die sich anschließende Bohrung 8 eingeführt bzw. eingesteckt, zumindest teilweise. Dies kann manuell erfolgen.

Das vollständige Einführen des Dübels 5 kann auch mit Hilfe eines Werkzeugs oder Schlagelements, wie eines Hammers, erfolgen.

Im vollständig eingeführten Zustand erstreckt sich der Dübel 5 um ein gewünschtes Maß bzw. ausreichend weit für eine feste Verankerung in das Bauwerk 3.

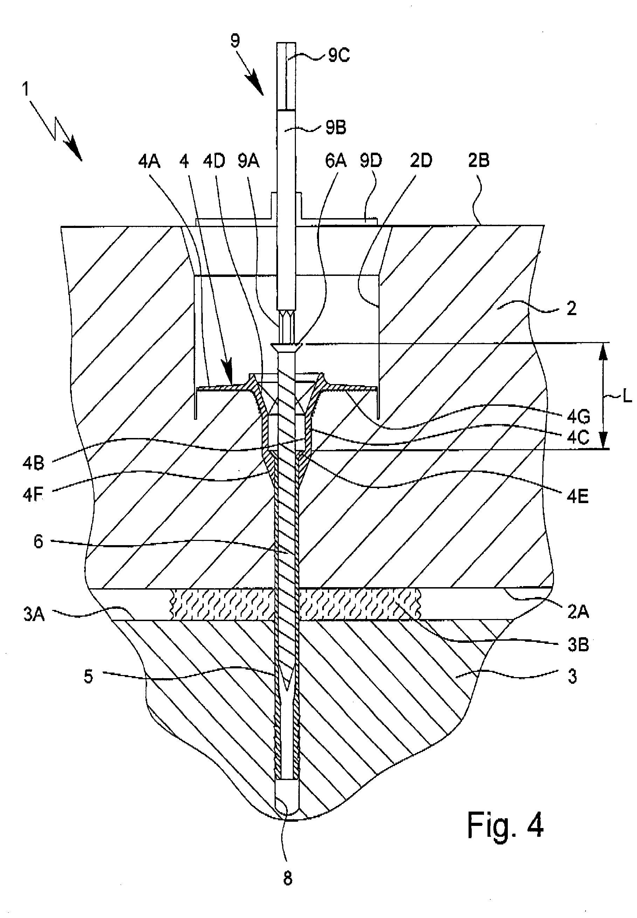

Fig. 4 zeigt in einem zu Fig. 1 und 2 korrespondierenden, schematischen Schnitt das gesetzte Befestigungselement 4 mit vollständig eingeführtem Dübel 5, jedoch noch nicht vollständig eingeführtem Spreizelement, also mit noch nicht (vollständig) eingeschraubter Schraube 6. Ein an das Spreizelement bzw. die Schraube 6 angesetztes Einschraubwerkzeug 9 ist dargestellt. Dieses Einschraubwerkzeug 9 kann auch zum (vollständigen) Einführen des Dübels 5 eingesetzt werden. Das Einschraubwerkzeug 9 weist hierfür vorzugsweise eine Markierung oder Anzeige 9D auf, die beispielsweise das vollständige Einführen des Dübels 5 dadurch anzeigt, dass die Anzeige 9D bzw. ein entsprechendes insbesondere scheibenartiges Anzeigeelement, eine Markierung oder dergleichen in der Ebene der Außenseite 2B der Dämmplatte 2 liegt, wie in Fig. 4 angedeutet.

Bei vollständig eingeführtem Dübel 5 erstreckt sich der Dübel 5 in der Bohrung 8 bis in das Bauwerk 3 und ist mit seinem bauwerksfernen Ende in der Aufnahme 4E des Befestigungselements 4 aufgenommen. Insbesondere wird eine kraft- oder formschlüssige Verbindung zwischen dem Dübel 5 und dem Befestigungselement 4 bzw. der Aufnahme 4E bei (vollständig) eingeführtem Dübel 5 derart gebildet, dass das Befestigungselement 4 axial von dem Dübel 5 gesichert bzw. gehalten wird, also axial von dem Dübel 5 nicht abziehbar ist. Beim Darstellungsbeispiel legt sich hierzu der Dübel 5 mit seinem vorzugsweise konisch verbreiterten dämmplattenseitigen oder äußeren Ende an die insbesondere komplementär dazu bzw. ebenfalls konisch ausgebildete Innenfläche der Aufnahme 4E an. Jedoch sind auch andere konstruktive Lösungen möglich.

Als Einschraubwerkzeug 9 kann beispielsweise ein Schraubendreher oder sonstiges auf der Baustelle verfügbares Handwerkzeug eingesetzt werden. Das Einschraubwerkzeug 9 dient dem Verspannen bzw. Festziehen der Dübelverbindung, insbesondere also dem Einschrauben der Schraube 6 in den Dübel 5.

Das vorschlagsgemäß besonders bevorzugt eingesetzte Einschraubwerkzeug 9 weist vorzugsweise die bereits genannte Anzeige 9D auf. Beim Darstellungsbeispiel weist das Einschraubwerkzeug 9 insbesondere einen Kopf 9A, einen Schaft 9B und einen Antriebsabschnitt 9C auf. Der Kopf 9A ist zum drehfesten Eingriff an der Schraube 6 bzw. deren Schraubenkopf 6A ausgebildet.

Bei dem Werkzeugkopf 9A handelt es sich vorzugsweise um einen Bit, einen Kreuzkopf, Vielrund, Sechsrund oder sonstigen Einsatz bzw. Mehrkantschlüssel, der insbesondere formschlüssig bzw. drehfest mit dem Spreizelement bzw. der Schraube 6 bzw. dessen Kopf 6A in Eingriff bringbar ist und/oder der vorzugsweise auswechselbar ist.

Das Werkzeug 9 bzw. der Schaft 9B ist vorzugsweise zur Aufnahme in einen Schrauber o. dgl. ausgebildet und daher insbesondere mit dem Antriebsanschnitt 9C versehen, der vorzugsweise zumindest bereichsweise als Mehrkant ausgeführt ist.

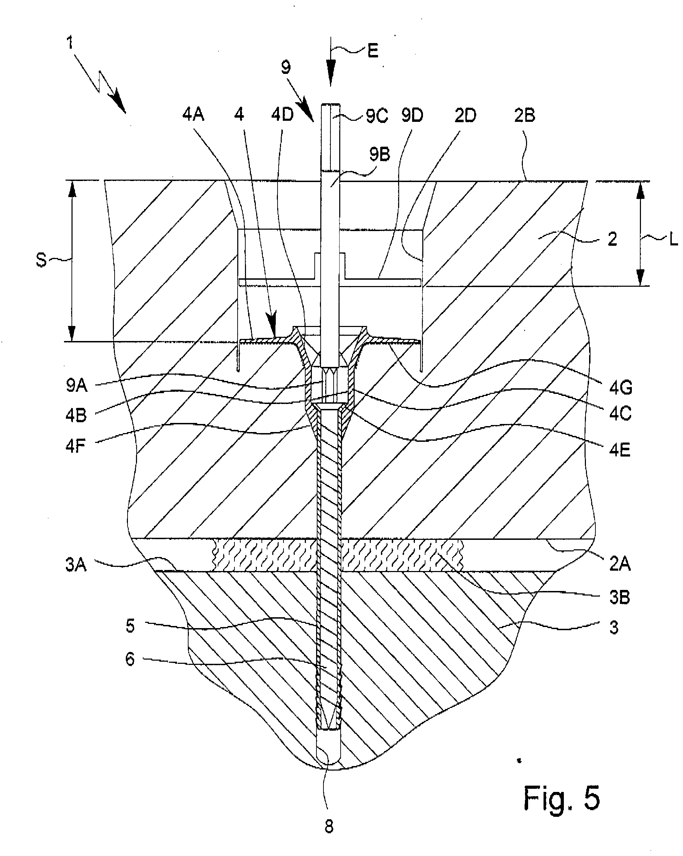

Fig. 4 zeigt das noch nicht vollständig eingeführte Spreizelement. Fig. 5 zeigt in einer entsprechenden Darstellung das vollständig eingeführte Spreizelement, also den Zustand mit vollständig eingeschraubter Schraube 6. Im vollständig eingeschraubten Zustand liegt der Schraubenkopf 6A vorzugsweise am äußeren bzw. dämmplattenseitigen Ende des Dübels 5 an. Das in Einbringrichtung E vordere Ende der Schraube 6 hat den Dübel 5 im Bauwerk 3 aufgespreizt und dadurch verankert bzw. festgelegt. In diesem Zustand ist das Befestigungselement 4 also fest mit dem Bauwerk 3 verbunden bzw. verdübelt.

Das vollständige Einschrauben der Schraube 6 kann bedarfsweise auch durch eine zusätzliche Anzeige, Markierung oder dergleichen am Werkzeug 9 dem Benutzer angezeigt werden.

Die Einschraublänge L, um die das Spreizelement eingeführt bzw. die Schraube 6 eingeschraubt wird, ist kleiner als die Setztiefe S des Befestigungselements 4. Dies stellt einen besonderen Vorteil des vorschlagsgemäßen Systems 1 bzw. des vorschlagsgemäßen Verfahrens dar. Die Setztiefe S des Befestigungselements 4 ist nämlich unabhängig von der Einschraublänge L.

Die Einschraublänge L bezieht sich bei der vorliegenden Erfindung vorzugsweise darauf, um welches Maß das Spreizelement bzw. die Schraube 6 in den Dübel 5 eingetrieben oder eingeschraubt wird, um den Dübel 5 im Bauwerk 3 aufzuspreizen und endgültig festzulegen bzw. zu verankern. Alternativ oder maximal beträgt diese Einschraublänge L die Länge, mit der der Dübel 5 oder das Spreizelement bzw. die Schraube 6 in das Bauwerk 3 im verdübelten Zustand hineinragt.

Das vorschlagsgemäße System 1 und das vorschlagsgemäße Verfahren zeichnen sich insbesondere dadurch aus, dass das Setzen des Befestigungselements 4 unabhängig von dem Einführen des Spreizelements bzw. Einschrauben der Schraube 6 also unabhängig von dem Verdübein erfolgt.

Das vorschlagsgemäße System 1, das vorschlagsgemäße Befestigungselement 4 und das vorschlagsgemäße Verfahren zeichnen sich dadurch aus, dass zuerst ein Setzen des Befestigungselements 4 erfolgt oder möglich ist und dass nach dem Setzen das Verbinden mit dem Bauwerk 3, das Andübeln bzw. Verdübeln, erfolgt oder möglich ist.

Besonders bevorzugt können handelsübliche Dübel 5 bzw. Standarddübel 5, besonders bevorzugt mit vormontiertem Spreizelement bzw. varmontierter- also teilweise eingeschraubter- Schraube 6, eingesetzt werden.

Nach dem Andübeln bzw. vollständigen Einschrauben der Schraube 6 wird das Einschraubwerkzeug 9 entfernt und die Vertiefung 2D wird durch einen Stopfen 2E verschlossen, wie in Fig. 1 dargestellt.

Der Stopfen 2E ist vorzugsweise aus einem wärmedämmenden Material bzw. vorzugsweise aus dem gleichen oder einem ähnlichen Dämmstoff wie die Dämmplatte 2 hergestellt.

Der bevorzugte Einsatz eines gleichen oder ähnlichen Dämmstoffs für den Stopfen 2E wie für die Dämmplatte 2 hat den Vorteil, dass kein Einbringen unterschiedlicher Materialien in die Dämmplatte 2 erfolgt. Dies ist insbesondere hinsichtlich einer außenseitigen Abdeckung bzw. einem außenseitigen Verputzen des Systems 1 bzw. der Dämmplatte 2 vorteilhaft, da so sich sonst oftmals im Bereich von Vertiefung 2D oder Befestigungselementen 4 ergebende Abzeichnungen vermieden werden können.

Der Stopfen 2E wird vorzugsweise in die Vertiefung 2D eingepresst. Der Stopfen 2E weist dementsprechend vorzugsweise ein gewisses radiales Übermaß auf.

Um ein leichtes Einsetzen bzw. Einführen des Stopfens 2E zu unterstützen, weist der Stopfen 2E vorzugsweise eine zumindest im Wesentlichen zu der Form der Vertiefung 2D korrespondierende Form auf.

Der eingesetzte Stopfen 2E schließt vorzugsweise bündig mit der Außenseite 2B der Dämmplatte ab.

Der Stopfen 2E kann sich im eingesetzten Zustand bis zum Befestigungselement 4 erstrecken bzw. auf diesem aufliegen oder alternativ beabstandet dazu enden.

Der Stopfen 2E weist vorzugsweise eine größere Dicke in Einbringrichtung E als die Einschraublänge L auf.

Der Stopfen E verhindert eine Wärmebrücke im Bereich der Vertiefung 2D nach außen, auch wenn das Spreizelement bzw. die Schraube 6 - wie üblich - vorzugsweise aus Metall hergestellt und deshalb gut wärmeleitend ist.

Nach dem Einsetzen des Stopfens 2E kann die Außenseite 2B der Dämmplatte 2 bedarfsweise verputzt werden. Dies bedeutet, dass das vorschlagsgemäße System 1 bzw. die befestigte Dämmplatte 2 außenseitig vorzugsweise abgedeckt wird, insbesondere durch einen nicht dargestellten Putz oder dergleichen. Bei diesem Putz handelt es sich insbesondere um ein Material oder einen Aufbau auf Mineralbasis, Kunststoffbasis o. dgl., das bzw. der vorzugsweise durch ein Gewebe verstärkt ist. Der Putz ist vorzugsweise sehr dünn ausgeführt und bildet insbesondere eine gegenüber dem Dämmstoff bzw. der Dämmplatte 2 relativ harte Oberfläche und/oder schützt die Dämmplatte 2 vor Umwelteinflüssen, wie Schlagregen, Druckbeanspruchung, Sonneneinstrahlung o. dgl.

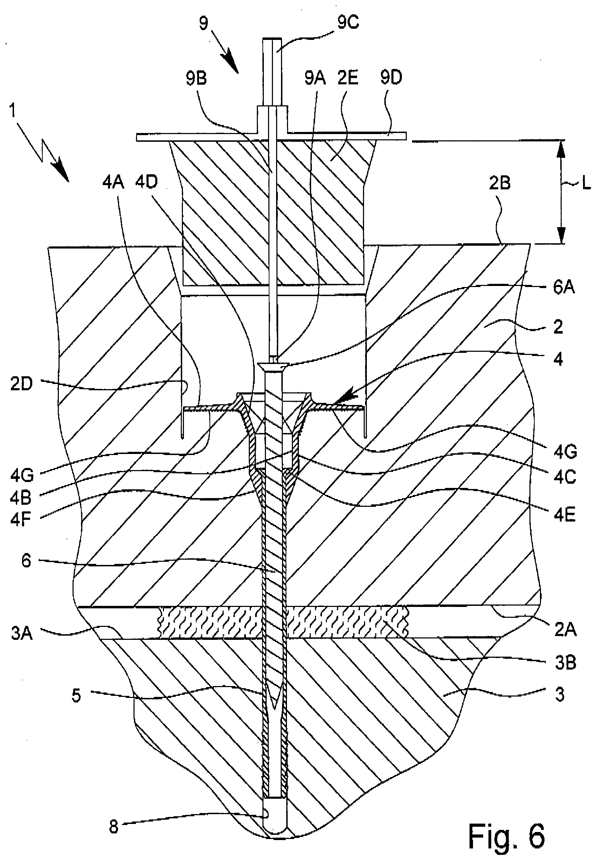

Fig. 6 zeigt in einem zu Fig. 4 korrespondierenden, schematischen Schnitt ein gemäß einer Ausführungsvariante etwas modifiziertes Einschraubwerkzeug 9. Hier wird der Stopfen 2E direkt von dem Einschraubwerkzeug 9 mit eingebracht. Insbesondere ist der Stopfen 2E auf den Schaft 9B aufgesteckt. Die Anzeige 9D dient hier nicht dem Anzeigen des vollständigen Einführens des Dübels 5 in das Befestigungselement 6, sondern dem Anzeigen des vollständigen Einschraubens der Schraube 6. Dementsprechend ist die Anzeige 9D hier anders angeordnet und insbesondere im Durchmesser größer ausgebildet, so dass bei vollständig eingeschraubter Schraube 6 die Anzeige 9D auf der Außenseite 2B der Dämmplatte 2 zum Liegen kommt. Der Stopfen 2E ist dann vorzugsweise bis zur Anzeige 9D auf den Schaft 9B aufgeschoben.

Wenn die Schraube 6 vollständig eingeschraubt ist, sitzt der Stopfen 2E vorzugsweise flächenbündig in der Vertiefung 2D. In dieser Position wird der Stopfen 2E insbesondere durch einen entsprechenden Reibschluss oder Klemmsitz mit dem die Vertiefung 2D bildenden Dämmstoff gehalten, so dass das Werkzeug 9 bzw. der Schaft 9B ohne Herausbewegen des Stopfens 2E herausgezogen werden kann. Anschließend muss nur noch das dünne Loch für den Schaft 9B verschlossen werden, wobei der Stopfen 2E auch derart ausgebildet sein kann, dass sich dieses Loch bzw. die Öffnung nach außen selbstständig verschließt. Beispielsweise können hier entsprechende, sich selbsttätig rückstellende Lamellen oder dergleichen am Öffnungsbereich des Stopfens 2E nach außen hin angeordnet sein.

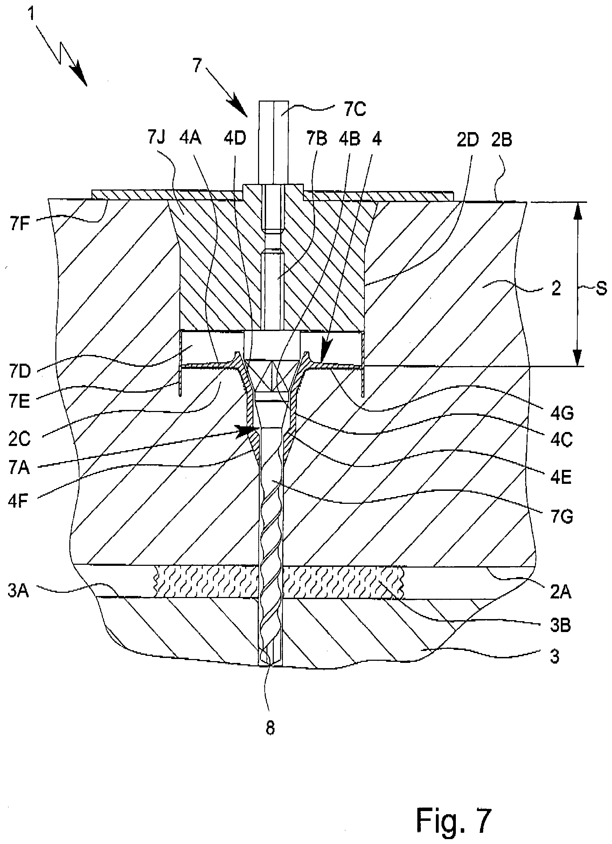

Fig. 7 zeigt in einem zu Fig. 2 korrespondierenden, schematischen Schnitt das Setzen eines Befestigungselements 4 mit einem etwas modifizierten Setzwerkzeug 7. Bei dieser Ausführungsvariante wird vorzugsweise gleichzeitig mit dem oder erst beim Setzen der Befestigungselemente 4 die jeweilige Dämmplatte 2 durchbohrt und das Bauwerk 3 angebohrt, also die Bohrung 8 gebildet. Dies vereinfacht die Montage bzw. den Verfahrensablauf, da ein vorheriges Bohren entfallen kann.

Bei dem Darstellungsbeispiel gemäß Fig. 7 ist das Setzwerkzeug 7 zum vorgenannten Bohren bzw. Erzeugen der Bohrung 8 ausgebildet. Insbesondere ist hierzu der Kopf 7A bzw. die Spitze 7G des Setzwerkzeugs 7 als Bohrer ausgeführt oder, besonders bevorzugt, zur Aufnahme eines Bohrers ausgebildet. Hierzu ist der Werkzeugkopf 7A dann insbesondere als Bohrfutter zur Aufnahme eines entsprechenden Bohrers ausgebildet.

Die vorschlagsgemäße Lösung zeigt verschiedene Merkmale und/oder führt zu verschiedenen Vorteilen,

Die äußere bzw. umlaufende Schneide 7E führt zu einem sauberen Einschnitt in den Dämmstoff bzw. die Dämmplatte 2. Dementsprechend kann der Stopfen 2E später sehr sauber und/oder gut dichtend eingesetzt werden. Weiter wird das Entstehen von Frässtaub, losem Dämmstoff oder dergleichen vermieden.

Die Schneide 7E ist vorschlagsgemäß insbesondere am Setzwerkzeug 7 angeordnet bzw. von diesem gebildet.

Insbesondere ist die Schneide 7E durch ein Schneidblech gebildet.

Alternativ kann die Schneide 7E aber auch direkt von dem Befestigungselement 4 bzw. deren Tellerabschnitt 4A gebildet oder daran angeordnet werden.

Die axial bzw. in Einbringrichtung E vorragende Schneide 7E bewirkt ein Abschirmen bzw. Abdecken bevor das Zermahlen bzw. Zerfräsen von dem Dämmstoff durch den Tellerabschnitt 4E erfolgt.

Die Schneide 7E führt zu einer guten Führung des Setzwerkzeugs 7 und damit auch des Befestigungselements 4 beim Einbringen bzw. Setzen, also beim Fräsen.

Es werden sehr hohe Drehzahlen ermöglicht, wobei grundsätzlich sehr feiner Staub entstehen kann. Dies ist hier unproblematisch, da eine sehr gute Führung und eine ausgezeichnete Abschirmung ermöglicht bzw. erreicht werden.

Besonders bevorzugt wird das Setzwerkzeug 7 bzw. Befestigungselement 4 beim Setzen mit hoher Drehzahl, insbesondere mit mehr als 100 Umdrehungen pro Minute, besonders bevorzugt mit mehr als 200 Umdrehungen pro Minute und ganz besonders bevorzugt mit mehr als 500 Umdrehungen pro Minute, ggf. sogar mit etwa 1000 Umdrehungen pro Minute oder höher, gedreht.

Überraschender Weise hat sich gezeigt, dass der Dämmstoff im Zwischenbereich 2C vorschlagsgemäß zermahlen bzw. zerfräst werden kann und dann ein wesentlich geringeres bzw. vernachlässigbares Volumen einnimmt.

Die durchbrechungsfreie Ausbildung des Befestigungselements 4 bzw. Tellerabschnitts 4A verhindert, dass loser Dämmstoff bzw. Frässtaub oder dergleichen insbesondere bei Entfernen des Setzwerkzeugs 7 nach außen dringt.

Die vorzugsweise vorgesehene Zahnung 4G und/oder sonstige dämmplattenseitige Profilierung des Befestigungselements 4 bzw. Tellerabschnitts 4A ist vorzugsweise derart ausgebildet, dass ein sehr feines Zermahlen bzw. Zerfräsen des Dämmstoffs erfolgt.

Der Vorsprung 4C des Befestigungselements 4 wird vorzugsweise durch einen radialen Presssitz im Dämmstoff bzw. in der Dämmplatte 2 bei gesetztem Befestigungselement 4 gehalten. Hierdurch wird erreicht, dass das Setzwerkzeug 7 abgezogen werden kann und gleichzeitig das Befestigungselement 4 in der Dämmplatte 2 festgehalten wird.

Das Befestigungselement 4 bzw. der Tellerabschnitt 4A muss an der Oberfläche bzw. außenseitig nicht eben ausgebildet sein.

Besonders bevorzugt ist eine Einführöffnung am Befestigungselement 4 bzw. von der Durchbrechung 4B bzw. dem Eingriffsabschnitt 4D gebildet. Dies erleichtert das Aufsetzen oder Aufschieben des Befestigungselements 4 auf das Setzwerkzeug 7 oder umgekehrt.

Die optionale konische Erweiterung der Vertiefung 2D bzw. Verbreiterung des Setzwerkzeugs 7 oder Gehäuseteils 7l gestattet eine verbesserte Führung des Setzwerkzeugs 7 und/oder unterstützt einen optimalen bzw. flächenbündigen bzw. definierten Sitz beim Einsetzen des Stopfens 2E.

Bedarfsweise kann das Befestigungselement 4 zunächst auch mit einer etwas größeren Setztiefe S gesetzt bzw. bis zu einer größeren Setztiefe S eingefräst werden, um einen möglichen Rückstelleffekt auf Grund der Elastizität des Dämmstoffs zu berücksichtigen. Das Befestigungselement 4 kann sich dann also nach dem oder bei dem Abziehen des Setzwerkzeugs 7 wieder etwas in Richtung des Außenfläche 2B der Dämmplatte 2 zurückbewegen, um dann in dieser Lage mit dem Bauwerk 3 verdübelt zu werden.

Die Vertiefungen 2D der Dämmplatte 2 können optimal und gut gedämmt verschlossen werden. Störstellen in der Dämmplatte 2 können vermieden werden. Insbesondere wird keine Wärmebrücke gebildet. Es erfolgt keine Behinderung von Diffusionsvorgängen. Weiter können optimale Schalldämmeigenschaften erreicht werden.

Bei der vorschlagsgemäßen Lösung können kurze und/oder kostengünstige und insbesondere auch handelsübliche Dübel 5 bzw. Dübelsysteme und/oder Schrauben 6 eingesetzt werden.

Die vorschlagsgemäß einsetzbaren Dübel 5 erlauben Logistikvorteile, insbesondere ein geringes Transportvolumen und/oder geringere Bevorratungsbestände, da Standarddübel eingesetzt werden können. Weiter müssen an der Baustelle nur geringe Volumen an Dübeln 5 gehandhabt werden.

Es wird eine sehr einfache, robuste Montage bzw. Befestigung ermöglicht.

Die Dämmplatte 2 kann wie bisher am Bauwerk 3 angeklebt werden.

Einzelne Aspekte und Merkmale der vorliegenden Erfindung und der verschiedenen Ausführungsvarianten und -formen können innerhalb des Stützumfangs der beigefügten Ansprüche beliebig miteinander kombiniert, aber auch unabhängig voneinander realisiert werden.

**Bezugszeichenliste:**

| | | | |
|---|---|---|---|
| 1 | System | 6A | Schraubenkopf |
| 2 | Dämmplatte | 7 | Setzwerkzeug |
| 2A | Bauwerkseite | 7A | Kopf |
| 2B | Außenseite | 7B | Schaft |
| 2C | Zwischenbereich | 7C | Antriebsabschnitt |
| 2D | Vertiefung | 7D | Aufnahmebereich |
| 2E | Stopfen | 7E | Schneide |
| 3 | Bauwerk | 7F | Anschlag |
| 3A | Oberfläche | 7G | Spitze |
| 3B | Schicht | 7H | Eingriffsbereich |
| 4 | Befestigungselement | 7J | Gehäuseteil |
| 4A | Tellerabschnitt | 8 | Bohrung |
| 4B | Durchbrechung | 9 | Einschraubwerkzeug |
| 4C | Vorsprung | 9A | Kopf |
| 4D | Eingriffsabschnitt | 9B | Schaft |
| 4E | Aufnahme | 9C | Antriebsabschnitt |
| 4F | Einführschräge | 9D | Anzeige |
| 4G | Zahnung | E | Einbringrichtung |
| 5 | Dübel | L | Einschraublänge |
| 6 | Schraube | S | Setztiefe |

## Patentansprüche

1. Verfahren zum Befestigen von Dämmplatten (2) an einem Bauwerk (3),
wobei die Dämmplatten (2) an dem Bauwerk (3) angeordnet, insbesondere abgeklebt, werden,
wobei tellerartige Befestigungselemente (4) in die Dämmplatten (2) eingebracht und dadurch in einer gewünschten Setztiefe (S) gesetzt werden,
insbesondere wobei durch das Setzen außenseitig Vertiefungen (2D) in den Dämmplatten (2) gebildet werden,
wobei die Dämmplatten (2) bis in das Bauwerk (3) durchbohrt werden und die Befestigungselemente (4) koaxial zu den erzeugten Bohrungen (8) gesetzt werden, und
wobei die Befestigungselemente (4) unter Drehen in die Dämmplatten (2) eingebracht und erst nach dem Setzen mit dem Bauwerk (3) dadurch verdübelt werden, dass Dübel (5) durch die bereits eingebrachten Befestigungselemente (4) hindurch in eine zugeordnete Bohrung (8) in das zugeordnete Bauwerk (3) eingeführt und mittels eines Spreizelements (6) gespreizt werden, und
wobei die Befestigungselemente (4) durch das Drehen den Dämmstoff der Dämmplatten (2) zermahlen bzw. zerfräsen.

2. Verfahren nach Anspruch 1, **dadurch gekennzeichnet, dass** die Befestigungselemente (4) durch das Drehen den Dämmstoff der Dämmplatten (2) zermahlen bzw. zerfräsen, ohne dass Frässtaub oder loser Dämmstoff nach außen austritt

3. Verfahren nach einem der voranstehenden Ansprüche, **dadurch gekennzeichnet, dass** das Setzen der Befestigungselemente (4) mit einer peripher umlaufenden Schneide (7E) erfolgt, die gegenüber einem Tellerabschnitt (4A) der Befestigungselemente (4) zur Dämmplatte (2) bzw. in Einbringrichtung (E) vorragt.

4. Verfahren nach Anspruch 3, **dadurch gekennzeichnet, dass** die Schneide (7E) und das jeweilige Befestigungselement (4) zusammen, insbesondere von einem Setzwerkzeug (7), beim Setzen der Befestigungselemente (4) gedreht werden.

5. Verfahren nach einem der voranstehenden Ansprüche, **dadurch gekennzeichnet, dass** die Befestigungselemente (4) jeweils mit einem in Einbringrichtung (E) vorragenden Vorsprung (4C) in der Dämmplatte (2) nach dem Setzen zumindest temporär bis zum Verdübeln mit dem Bauwerk (3) gehalten werden.

6. Verfahren nach einem der voranstehenden Ansprüche, **dadurch gekennzeichnet, dass** die Vertiefungen (2D) zur Außenseite (2B) hin konisch verbreitert ausgebildet werden.

7. Verfahren nach einem der voranstehenden Ansprüche, **dadurch gekennzeichnet, dass** die Vertiefungen (2D) jeweils durch einen Stopfen (2E) zumindest im Wesentlichen flächenbündig verschlossen werden.

8. Verfahren nach einem der voranstehenden Ansprüche, **dadurch gekennzeichnet, dass** die Befestigungselemente (4) jeweils einen Tellerabschnitt (4A) mit einer zentralen Durchbrechung (4B) und einen dämmplattenseitigen, insbesondere einstückig angeformten Vorsprung (4C) aufweisen, wobei der Vorsprung (4C) die Durchbrechung (4B) umgibt und eine Einführschräge (4F) bildet, die in den Dämmstoff der Dämmplatte (2) eingebracht wird.

9. Verfahren nach einem der voranstehenden Ansprüche, **dadurch gekennzeichnet, dass** die Befestigungselemente (4) mittels eines Setzwerkzeugs (7) gesetzt werden, wobei das Setzwerkzeug (7) in einen Eingriffsabschnitt (4D) einer Durchbrechung (4B) des jeweiligen Befestigungselements (4) drehfest eingreift, und dass ein Dübel (5) von einer Aufnahme (4E) der Durchbrechung (4B) beim Andübeln des jeweiligen Befestigungselements (4) axial widergelagert wird.

10. Verfahren nach einem der voranstehenden Ansprüche, **dadurch gekennzeichnet, dass** die Befestigungselemente (4) mit Dübeln (5) und in die Dübel (5) eingeschraubten Schrauben (6) an dem Bauwerk (3) angedübelt werden, wobei die Setztiefe (S) größer als die Einschraublänge (L) der Schrauben (6) in das Bauwerk (3) ist.

11. Verfahren nach einem der voranstehenden Ansprüche, **dadurch gekennzeichnet, dass** gleichzeitig mit dem Setzen der Befestigungselemente (4) die jeweilige Dämmplatte (2) durchbohrt und das Bauwerk (3) angebohrt wird.

12. System (1) zur Befestigung von Dämmplatten (2) an einem Bauwerk (3) gemäß einem der voranstehenden Ansprüche, mit mindestens einer Dämmplatte (2), mindestens einem Befestigungselement (4), mindestens einem Dübel (5) und mindestens einer Schraube (6),
wobei die Dämmplatte (2) bis in das Bauwerk (3) durchbohrt ist und das Befestigungselement (4) koaxial zu der erzeugten Bohrung (8) gesetzt ist,
wobei das Befestigungselement (4) in eine bestimmte Setztiefe (S) in die Dämmplatte (2) ausgehend von der Außenseite (2B) der Dämmplatte (2) eingebracht ist, wobei das Befestigungselement (4) mittels des Dübels (5) und der in den Dübel (5) eingeschraubten Schraube (6) in einem befestigten Zustand an einem Bauwerk (3) angedübelt ist,
wobei das Befestigungselement (4) einen Tellerabschnitt (4A) mit einer zentralen Durchbrechung (4B) aufweist, wobei der Tellerabschnitt (4A) einen Frästeller bildet und wobei die Durchbrechung (4B) einen Eingriffsabschnitt (4D) zum drehfesten Eingriff eines Setzwerkzeugs (7) und eine zur Durchbrechung (4B) koaxiale Aufnahme (4E) zur axialen Widerlagerung eines außenseitig einsteckbaren Dübels (5) aufweist,
wobei nach dem Setzen des Befestigungselements (4) das Befestigungselement (4) mit dem Bauwerk (3) durch Einführen und Spreizen des Dübels (5) verdübelbar ist, und
wobei die Setztiefe (S) größer als die Einschraublänge (L) der Schraube (6) in das Bauwerk (3) ist.

13. Verwendung eines Befestigungselements (4) zur Befestigung einer Dämmplatte (2) an einem Bauwerk (3), mit einem Tellerabschnitt (4A) und einer zentralen Durchbrechung (4B),
wobei der Tellerabschnitt (4A) einen Frästeller bildet,
wobei die Durchbrechung (4B) einen Eingriffsabschnitt (4D) und eine zur Durchbrechung koaxial Aufnahme (4E) aufweist, wobei ein Setzwerkzeug (7) drehfest in den Eingriffsabschnitt (4D) eingreift, und
wobei die Dämmplatte (2) bis in das Bauwerk (3) durchbohrt wird und das Befestigungselement (4) koaxial zu der erzeugten Bohrung (8) gesetzt wird, und
wobei ein außenseitig eingesteckter Dübel (5) von der Aufnahme (4E) axial widergelagert wird, so dass nach dem Setzen des Befestigungselements (4) das Befestigungselement (4) mit dem Bauwerk (3) durch Einführen und Spreizen des Dübels (5) verdübelt wird.

## Claims

1. Method for fixing insulation boards (2) to a building (3),
the insulation boards (2) being arranged on the building (3), in particular adhesively bonded on,
disc-like fixing elements (4) being introduced into the insulation boards (2) and, as a result, being set at a desired setting depth (S),
in particular exterior depressions (2D) being formed in the insulation boards (2) by the setting,
the insulation boards (2) being drilled through to the building (3) and the fixing elements (4) being set coaxially relative to the bore holes (8) produced, and
wherein the fixing elements (4) are introduced into the insulation boards (2) whilst being rotated and only after the setting are dowelled to the building (3) by dowels (5) being introduced through the already introduced fixing elements (4) into an associated bore hole (8) in the associated building (3) and being expanded by means of an expanding element (6), and
wherein the fixing elements (4) grind or mill the insulation material of the insulation boards (2) as a result of the rotation.

2. Method according to Claim 1, **characterized in that** the fixing elements (4) grind or mill the insolation material of the insulation boards (2) as a result of the rotation, without milling dust or loose insulation material escaping to the outside.

3. Method according to one of the preceding claims, **characterized in that** the setting of the fixing elements (4) is carried out with a peripheral cutting edge (7E) which projects with respect to a disc portion (4A) of the fixing elements (4) to the insulation board (2) and/or in the introduction direction (E).

4. Method according to Claim 3, **characterized in that** the cutting edge (7E) and the respective fixing element (4) are rotated together, in particular by a setting tool (7), during the setting of the fixing elements (4).

5. Method according to one of the preceding claims, **characterized in that** the fixing elements (4) are each held in the insulation board (2) with a protrusion (4C) projecting in the introduction direction (E) following the setting, at least temporarily until they are dowelled to the building (3).

6. Method according to one of the preceding claims, **characterized in that** the depressions (2D) are formed so as to be widened conically towards the outside (2B).

7. Method according to one of the preceding claims, **characterized in that** the depressions (2D) are each closed, at least substantially flush, by a plug (2E).

8. Method according to one of the preceding claims, **characterized in that** the fixing elements (4) each have a disc portion (4A) with a central through hole (4B) and a protrusion (4C) on the insulation board side, in particular moulded on in one piece, the protrusion (4C) surrounding the through hole (4B) and forming an insertion bevel (4F), which is introduced into the insulating material of the insulation board (2).

9. Method according to one of the preceding claims, **characterized in that** the fixing elements (4) are set by means of a setting tool (7), the setting tool (7) engaging in a rotationally fixed manner in an engagement portion (4D) of a through hole (4B) of the respective fixing element (4), and **in that** a dowel (5) is supported axially by a receptacle (4E) of the through hole (4B) as the respective fixing element (4) is dowelled on.

10. Method according to one of the preceding claims, **characterized in that** the fixing elements (4) are dowelled to the building (3) with dowels (5) and screws (6) screwed into the dowels (5), the setting depth (S) being greater than the screw-in length (L) of the screws (6) into the building (3).

11. Method according to one of the preceding claims, **characterized in that**, at the same time as the setting of the fixing elements (4), the respective insulation board (2) is drilled through and the building (3) is drilled into.

12. System (1) for fixing insulation boards (2) to a building (3) according to one of the preceding claims, having at least one insulation board (2), at least one fixing element (4), at least one dowel (5) and at least one screw (6),
the insulation board (2) being drilled through to the building (3) and the fixing element (4) being set coaxially relative to the bore hole (8) produced,
the fixing element (4) being introduced to a specific setting depth (S) into the insulation board (2), starting from the outside (2B) of the insulation board (2),
the fixing element (4) being dowelled to the building (3) in a fixed state by means of the dowel (5) and the screw (6) screwed into the dowel (5),
the fixing element (4) having a disc portion (4A) with a central through hole (4B), the disc portion (4A) forming a milling plate, and the through hole (4B) having an engagement portion (4D) for the rotationally fixed engagement of a setting tool (7) and a receptacle (4E) for the axial support of a dowel (5) that can be inserted from outside, the receptacle (4E) being coaxial with the through hole (4B), wherein, following the setting of the fixing elements (4), the fixing element (4) can be dowelled to the building (3) by inserting and expanding the dowel (5), and wherein the setting depth (S) is greater than the screw-in length (L) of the screw (6) into the building (3).

13. Use of a fixing element (4) for fixing an insulation board (2) to a building (3), having a disc portion (4A) and a central through hole (4B),
the disc portion (4A) forming a milling plate,
the through hole (4B) having an engagement portion (4D) and a receptacle (4E) which is coaxial with the through hole, a setting tool (7) engaging in the engagement portion (4D) in a rotationally fixed manner, and
the insulation board (2) being drilled through to the building (3) and the fixing element (4) being set coaxially relative to the bore hole (8) produced, and
a dowel (5) inserted from the outside being supported axially by the receptacle (4E), so that, following the setting of the fixing element (4), the fixing element (4) is dowelled to the building (3) by inserting and expanding the dowel (5).

## Revendications

1. Procédé de fixation de plaques isolantes (2) sur un ouvrage de construction (3),
les plaques d'isolation (2) étant disposées sur l'ouvrage (3) et en particulier y étant collées,
des éléments de fixation (4) en forme de rondelle étant incorporés dans les plaques isolantes (2) et y étant placés à une profondeur de pose (S) souhaitée,
en particulier des creux extérieurs (2D) étant formés pendant le placement dans les plaques d'isolation (2),
les plaques d'isolation (2) étant forées jusque dans l'ouvrage (3) et les éléments de fixation (4) étant posés coaxialement par rapport aux alésages (8) ainsi formés, et les éléments de fixation (4) étant insérés dans les plaques d'isolation (2) par rotation et ne étant chevillés sur l'ouvrage (3) qu'après le placement, en insérant des chevilles (5) à travers les éléments de fixation (4) déjà placés, dans un alésage (8) associé dans l'ouvrage (3) associé, et étant expansés au moyen d'un élément expansible (6), et
les éléments de fixation (4) broyant ou fraisant par leur rotation le matériau isolant des plaques d'isolation (2).

2. Procédé selon les revendications 1, **caractérisé en ce que** les éléments de fixation (4) broient ou fraisent par leur rotation le matériau isolant des plaques d'isolation (2), sans que de la poussière de fraisage ou du matériau isolant libéré sortent vers l'extérieur.

3. Procédé selon l'une des revendications précédentes, **caractérisé en ce que** la pose des éléments de fixation (4) s'effectue à l'aide d'un tranchant périphérique (7E) qui déborde par rapport à une section (4A) en rondelle des éléments de fixation (4) en direction de la plaque d'isolation (2) et/ou dans la direction d'insertion (E).

4. Procédé selon la revendication 3, **caractérisé en ce que** le tranchant (7E) et l'élément de fixation (4) concerné sont tournés ensemble, en particulier par un outil de placement (7), lors du placement des éléments de fixation (4).

5. Procédé selon l'une des revendications précédentes, **caractérisé en ce qu'**après la pose et au moins temporairement jusqu'au chevillage sur l'ouvrage (3), chacun des éléments de fixation (4) est maintenu dans la plaque d'isolation (2) par une saillie (4C) qui déborde dans la direction d'insertion (E).

6. Procédé selon l'une des revendications précédentes, **caractérisé en ce que** les creux (2D) s'évasent coniquement en direction du côté extérieur (2B).

7. Procédé selon l'une des revendications précédentes, **caractérisé en ce que** les creux (2D) sont fermés par un bouchon (2E), au moins essentiellement à chant par rapport à la surface.

8. Procédé selon l'une des revendications précédentes, **caractérisé en ce que** les éléments de fixation (4) présentent chacun une section en rondelle (4A) dotée d'une perforation centrale (4B) et d'une saillie (4C) située côté plaque d'isolation et en particulier formée d'un seul tenant, la saillie (4C) entourant la perforation (4B) et formant une pente d'insertion (4F) qui est ménagée dans le matériau isolant de la plaque d'isolation (2).

9. Procédé selon l'une des revendications précédentes, **caractérisé en ce que** les éléments de fixation (4) sont placés au moyen d'un outil de placement (7), l'outil de placement (7) s'engageant à rotation solidaire dans une section d'engagement (4D) d'une perforation (4B) de l'élément de fixation (4) concerné et **en ce que** lors de la fixation de l'élément de fixation (4) concerné par chevillage, une cheville (5) est montée axialement depuis un logement (4E) de la perforation (4B).

10. Procédé selon l'une des revendications précédentes, **caractérisé en ce que** les éléments de fixation (4) sont fixés par chevillage sur l'ouvrage (3) à l'aide de chevilles (5) et de vis (6) vissées dans les chevilles (5), la profondeur de placement (S) étant supérieure à la longueur de vissage (L) des vis (6) dans l'ouvrage (3).

11. Procédé selon l'une des revendications précédentes, **caractérisé en ce qu'**en même temps que le placement des éléments de fixation (4), la plaque d'isolation (2) concernée est forée et l'ouvrage (3) est foré.

12. Système (1) de fixation de plaques d'isolation (2) sur un ouvrage (3) selon l'une des revendications précédentes, et présentant au moins une plaque d'isolation (2), au moins un élément de fixation (4), au moins une cheville (5) et au moins une vis (6),
la plaque d'isolation (2) étant forée jusque dans l'ouvrage (3) et l'élément de fixation (4) étant posé coaxialement par rapport aux alésage (8) ainsi formé,
l'élément de fixation (4) étant placé à une profondeur de placement (S) définie dans la plaque d'isolation (2) depuis le côté extérieur (2B) de la plaque d'isolation (2),
l'élément de fixation (4) étant chevillé dans un ouvrage (3) en position fixée, au moyen de la cheville (5) et de la vis (6) vissée dans la cheville (5),
l'élément de fixation (4) présentant une section (4A) en rondelle dotée d'une perforation centrale (4B), la section (4A) en rondelle formant une plaque de fraisage, et la perforation (4B) présentant une section d'engagement (4D) qui engage à rotation solidaire un outil de placement (7) et un logement (4E) coaxial à la perforation (4B) pour une support axial d'une cheville (5) apte à être enfichée par l'extérieur,
après le placement de l'élément de fixation (4), l'élément de fixation (4) pouvant être chevillé sur l'ouvrage (3) par insertion et expansion de la cheville (5), et
la profondeur de pose (S) étant supérieure à la longueur de vissage (L) de la vis (6) dans l'ouvrage (3).

13. Utilisation d'un élément de fixation (4) pour la fixation d'une plaque d'isolation (2) sur un ouvrage (3) à l'aide d'une section en rondelle (4A) et d'une perforation centrale (4B),
la section (4A) en rondelle formant une plaque de fraisage,
la perforation (4B) présentant une section d'engagement (4D) et un logement (4E) coaxial à la perforation, un outil de placement (7) s'engageant à rotation solidaire dans la section d'engagement (4D), et
la plaque d'isolation (2) étant forée jusque dans l'ouvrage (3) et l'élément de fixation (4) étant posé coaxialement par rapport aux alésage (8) ainsi formé, et
une cheville (5) insérée par l'extérieur étant soutenue axialement par le logement (4E) de telle sorte qu'après le placement de l'élément de fixation (4), l'élément de fixation (4) est chevillé dans l'ouvrage (3) par insertion et expansion de la cheville (5).
